# EUROPEAN PATENT SPECIFICATION

(11) **EP 2 222 776 B1**
(45) Date of publication and mention of the grant of the patent: **13.11.2013**
(21) Application number: 08856706.0
(22) Date of filing: 02.12.2008
(51) Int. Cl.: C08K 5/17, C08L 21/00, C09J 121/00

(54) **WATER-BASED CEMENT FOR PRODUCING TYRES**
AUF WASSER BASIERENDER KLEBSTOFF ZUR HERSTELLUNG VON REIFEN
COLLE À BASE D'EAU DESTINÉE À PRODUIRE DES PNEUS

(30) Priority: 03.12.2007 IT TO20070874
(43) Date of publication of application: 01.09.2010
(73) Proprietor: Bridgestone Corporation, Tokyo 104-8340 (JP)
(72) Inventor: CANTONETTI, Veronica, I-00156 Roma (IT); COTUGNO, Salvatore, I-00131 Roma (IT)
(74) Representative: Bosman, Cesare
(86) International application number: PCT/EP2008/066664
(87) International publication number: WO 2009/071562

(56) References cited:
- WO-A1-95/19385
- JP-A- 2001 294 766

## Description

### TECHNICAL FIELD

The present invention relates to a water-based cement for producing tyres.

### BACKGROUND ART

In tyre manufacturing, cements are normally organic-solvent-based. Cements of this sort are highly adhesive and easy to use, mainly on account of rubber dissolving readily in organic solvents and so blending with other rubber to form practically one piece once the organic solvent evaporates.

For environmental reasons, recent European directives have imposed a drastic reduction in the use of organic solvents in the tyre industry, thus forcing manufacturers to devise alternative solutions to ensure correct adhesion of rubber layers.

One alternative to traditional cements is water-based cements, in which organic solvent is replaced by water as solvent, and which poses the problem of ensuring dispersion in water of intrinsically hydrophobic ingredients. This is done using emulsifiers which, as is known, comprise a hydrophobic group capable of bonding the ingredient in question, and a hydrophilic group capable of ensuring its dispersion in water. Since emulsifiers are normally selectively effective as regards a particular compound, the making of water-based cement calls for using different types of emulsifiers.

Tests show that the presence of large quantities and different types of emulsifiers may impair the adhesive strength of the cement, hence the strong demand for water-based cement emulsifiers that are effective over a wide range of ingredients, to reduce both the quantity and the number of types of emulsifiers used.

The Applicant has surprisingly discovered a particular class of emulsifiers that is universally effective over the various ingredients of water-based cement.

### BEST MODE FOR CARRYING OUT THE INVENTION

According to the present invention, there is provided a water-based cement for producing tyres, comprising water as solvent, cross-linkable unsaturated-chain polymer base, sulphur, reinforcing filler, zinc oxide, and accelerators; said cement being characterized by comprising as emulsifiers only compounds of the general formula (I)

R₁CONR₂CHR₃COOX (I)

where :
R₁ is an aliphatic group C₆-C₂₃
R₂ is H or an aliphatic group C₁-C₈
R₃ is H or an aliphatic or aromatic group C₁-C₈, and
X is a metal cation.

Preferably, the water-based cement comprises by weight 5 to 80% of water, 10 to 60% of a cross-linkable unsaturated-chain polymer base, 0.2 to 1% of sulphur, 1 to 25% of reinforcing filler, 0.1 to 3% of zinc oxide, and 0.1 to 1% of accelerators; said cement being characterized by comprising 0.1 to 10% of an emulsifier of the general formula (I).

Preferably, aliphatic group R₁ comprises a double bond.

Preferably, the quantity of emulsifier in the cement ranges between 0.5 and 5% by weight.

The examples below are purely indicative and nonlimiting, for a clearer understanding of the invention.

### EXAMPLES

Six cements A, B, C, D, E, F were prepared. Cement A is a solvent-based cement; cement B is a known waster-based cement; and cements D-F are water-based cements in accordance with the invention and employing emulsifiers of formula (I).

Table I shows the compositions, in percentage by weight, of the six cements.

**TABLE I**

| | A | B | C | D | E | F |
|---|---|---|---|---|---|---|
| WATER | -- | 50.0 | 50.0 | 52.0 | 52.0 | 52.0 |
| HEPTANE | 70.0 | -- | -- | -- | -- | -- |
| NATURAL RUBBER | 18.0 | 25.0 | 25.6 | 26.6 | 26.6 | 26.6 |
| CARBON BLACK | 9.0 | 13.0 | 13.0 | 13.0 | 13.0 | 13.0 |
| STEARIC ACID | 0.6 | -- | -- | -- | -- | -- |
| ZINC OXIDE | 0.3 | 1.0 | 1.0 | 1.0 | 1.0 | 1.0 |
| ADHESIVE RESIN | 2.0 | 5.0 | 3.6 | 3.6 | 3.6 | 3.6 |
| SULPHUR | 0.3 | 0.5 | 0.5 | 0.5 | 0.5 | 0.5 |
| SULPHONAMIDE | 0.3 | 0.5 | 0.5 | 0.5 | 0.5 | 0.5 |
| STANDARD EMULSIFIERS | -- | 5.0 | 2.5 | -- | -- | -- |
| EMULSIFIER (a) | -- | -- | 2.5 | 2.0 | -- | -- |
| EMULSIFIER (b) | -- | -- | -- | -- | 2.0 | -- |
| EMULSIFIER (c) | -- | -- | -- | -- | -- | 2.0 |

The standard emulsifiers used in cements B and C are: naphthylsulphonic acid for dispersing zinc oxide, sulphur, and accelerators; ethoxylated aliphatic amines and ethoxylated fatty acids for dispersing carbon black.

The emulsifier (a) according to the present invention used in cement D is of the formula (CH₃) (CH₂)₁₈CON(CH₃)CH₂COONa.

The emulsifier (b) according to the present invention used in cement E is of the formula CH₃(CH₂)₇CHCH (CH₂)₇CONHCH₂COONa.

The emulsifier (c) according to the present invention used in cement F is of the formula CH₂CH(CH₂)₈CONHCH₂COONa.

The emulsifiers used in the cements according to the present invention may differ from those in the above examples. In particular, the group R₃ may also comprise heteroatoms such as S, N or O.

As will be clear to an expert, in addition to natural rubber, the cements according to the present invention may comprise any cross-linkable chain polymer base obtained by polymerization of conjugate dienes and/or aliphatic or aromatic vinyl monomers. For example, usable polymer bases are selected from the group comprising natural rubber, 1,4-cis polyisoprene, polybutadiene, isoprene-isobutene copolymers, possibly halogenated, butadiene-acrylonitrile copolymers, styrene-butadiene copolymers and styrene-butadiene-isoprene terpolymers, both in solution and emulsion, and ethylene-propylene-diene terpolymers. The above polymer bases may be used singly or mixed.

### Laboratory tests

Each cement was adhesion-tested on both green and cured rubber, as per ASTM Standard D624, was tested for rheometric properties as per ASTM Standard D5289, and was viscosity-tested as per ASTM Standard D6080. Table II shows the test results.

**TABLE II**

| | A | B | C | D | E | F |
|---|---|---|---|---|---|---|
| Viscosity (cps) | 100 | 100 | 100 | 100 | 100 | 100 |
| ML (dNm) | 2.1 | 2.0 | 2.0 | 2.1 | 2.2 | 2.1 |
| MH (dNm) | 18.0 | 16.8 | 17.5 | 16.9 | 18.0 | 19.0 |
| T10 (min) | 0.7 | 0.5 | 0.6 | 0.5 | 0.8 | 0.6 |
| T50 (min) | 1.1 | 1.1 | 1.2 | 1.2 | 1.2 | 1.1 |
| T90 (min) | 2.9 | 3.0 | 3.2 | 3.2 | 3.1 | 3.2 |
| Green-rubber adhesion (N/mm) | 2.00 | 1.20 | 1.70 | 1.70 | 1.7 | 1.7 |
| Cured-rubber adhesion* (N/mm) | 20.00 | 10.00 | 17.00 | 19.70 | 21.7 | 23.2 |

| | | | | | | |
|---|---|---|---|---|---|---|
| * The cured rubber was obtained as per ASTM Standard 1382, by curing for 10 minutes at a constant temperature of 160°C. | | | | | | |

As shown in Table II, reducing the number of different types of emulsifiers in the cement improves its adhesive strength, so much so that the adhesive strength of cements comprising only one type of emulsifier (cements D-F) is even greater than that of the organic-solvent-based cement (A).

As shown in Table II, using only one type of emulsifier means a smaller amount can be used, thus improving the stability and adhesive strength of the cement.

Moreover, the double bond in the aliphatic chain R₁ further improves adhesion of the cement by participating in cross-linking reactions.

In short, using a universal emulsifier, different types of emulsifier need no longer be used, and the amount of emulsifier used can be greatly reduced.

As shown by the results in Table II, using an emulsifier as claimed in no way impairs the other characteristics of the cement, such as viscosity and rheometric properties.

## Claims

1. A water-based cement for producing tyres, comprising water as solvent, a cross-linkable unsaturated-chain polymer base, sulphur, a reinforcing filler, zinc oxide, and accelerators; said cement being **characterized by** comprising as emulsifiers only compounds of the general formula (I)
R₁CONR₂CHR₃COOX (I)
where :
R₁ is an aliphatic group C₆-C₂₃
R₂ is H or an aliphatic group C₁-C₈
R₃ is H or an aliphatic or aromatic group C₁-C₈, and
X is a metal cation.

2. A water-based cement for producing tyres as claimed in claim 1, **characterized by** comprising by weight 5 to 80% of water, 10 to 60% of a cross-linkable unsaturated-chain polymer base, 0.2 to 1% of sulphur, 1 to 25% of reinforcing filler, 0.1 to 3% of zinc oxide, and 0.1 to 1% of accelerators; said cement being **characterized by** comprising 0.1 to 10% of an emulsifier of the general formula (I).

3. A water-based cement for producing tyres, as claimed in Claim 1 or 2, **characterized in that** X is an alkaline metal cation.

4. A water-based cement for producing tyres, as claimed in one of the foregoing claims, **characterized in that** said emulsifier is CH₃(CH₂)₁₈CON(CH₃)CH₂COONa.

5. A water-based cement for producing tyres, as claimed in Claim 1, **characterized in that** the aliphatic group R₁ comprises a double bond.

6. A water-based cement for producing tyres, as claimed in Claim 5, **characterized in that** said emulsifier is CH₃(CH₂)₇CHCH(CH₂)₇CONHCH₂COONa or CH₂CH(CH₂)₈CONHCH₂COONa.

7. A water-based cement for producing tyres, as claimed in one of the foregoing Claims, **characterized by** comprising 0.5 to 5% by weight of said emulsifier.

8. A tyre produced using a water-based cement as claimed in any one of the foregoing Claims.

## Patentansprüche

1. Auf Wasser basierender Klebstoff zur Herstellung von Reifen, umfassend Wasser als Lösemittel, eine Polymergrundlage mit vernetzbaren ungesättigten Ketten, Schwefel, einen Verstärkungsfüllstoff, Zinkoxid und Beschleuniger; wobei der Klebstoff **dadurch gekennzeichnet ist, dass** er als Emulgatoren nur Verbindungen der allgemeinen Formel (I)
R₁CONR₂CHR₃COOX (I)
umfasst, wobei:
R1 eine aliphatische C₆-C₂₃-Gruppe ist
R2 H oder eine aliphatische C₁-C₈-Gruppe ist
R3 H oder eine aliphatische oder aromatische C₁-C₈-Gruppe ist und
X ein Metallkation ist.

2. Auf Wasser basierender Klebstoff zur Herstellung von Reifen, nach Anspruch 1, **dadurch gekennzeichnet, dass** er, bezogen auf das Gewicht, 5 bis 80 % Wasser, 10 bis 60 % Polymergrundlage mit vernetzbaren ungesättigten Ketten, 0,2 bis 1 % Schwefel, 1 bis 25 % Verstärkungsfüllstoff, 0,1 bis 3 % Zinkoxid und 0,1 bis 1 % Beschleuniger umfasst; wobei der Klebstoff **dadurch gekennzeichnet ist, dass** er 0,1 bis 10 % eines Emulgators der allgemeinen Formel (I) umfasst.

3. Auf Wasser basierender Klebstoff zur Herstellung von Reifen, nach Anspruch 1 oder 2, **dadurch gekennzeichnet, dass** X ein Alkalimetallkation ist.

4. Auf Wasser basierender Klebstoff zur Herstellung von Reifen, nach einem der vorstehenden Ansprüche, **dadurch gekennzeichnet, dass** der Emulgator CH₃(CH₂)₁₈CON(CH₃)CH₂COONa ist.

5. Auf Wasser basierender Klebstoff zur Herstellung von Reifen, nach Anspruch 1, **dadurch gekennzeichnet, dass** die aliphatische Gruppe R₁ eine Doppelbindung umfasst.

6. Auf Wasser basierender Klebstoff zur Herstellung von Reifen, nach Anspruch 5, **dadurch gekennzeichnet, dass** der Emulgator CH₃(CH₂)₇CHCH(CH₂)₇CONHCH₂COONa oder CH₂CH(CH₂)₈CONHCH₂COONa ist.

7. Auf Wasser basierender Klebstoff zur Herstellung von Reifen, nach einem der vorstehenden Ansprüche, **dadurch gekennzeichnet, dass** er 0,5 bis 5 Gewichts-% des Emulgators umfasst.

8. Reifen hergestellt unter Verwendung eines auf Wasser basierenden Klebstoffs wie in einem der vorstehenden Ansprüche beansprucht.

## Revendications

1. Ciment aqueux pour la production de bandages pneumatiques, comprenant de l'eau comme solvant, une base polymère à chaîne insaturée réticulable, du soufre, une charge de renforcement, de l'oxyde de zinc et des accélérateurs ; ledit ciment étant **caractérisé en ce qu'**il comprend comme émulsionnants seulement des composés de formule générale (I)
R₁CONR₂CHR₃COOX (I)
dans laquelle :
R₁ représente un groupe aliphatique en C₆ à C₂₃
R₂ représente H ou un groupe aliphatique en C₁ à C₈
R₃ représente H ou un groupe aliphatique ou aromatique en C₁ à C₈, et
X représente un cation métallique.

2. Ciment aqueux pour la production de bandages pneumatiques suivant la revendication 1, **caractérisé en ce qu'**il comprend en poids 5 à 80 % d'eau, 10 à 60 % d'une base polymère à chaîne insaturée réticulable, 0,2 à 1 % de soufre, 1 à 25 % d'une charge de renforcement, 0,1 à 3 % d'oxyde de zinc et 0,1 à 1 % d'accélérateurs ; ledit ciment étant **caractérisé en ce qu'**il comprend 0,1 à 10 % d'un émulsionnant de formule générale (I).

3. Ciment aqueux pour la production de bandages pneumatiques suivant la revendication 1 ou 2, **caractérisé en ce que** X représente un cation de métal alcalin.

4. Ciment aqueux pour la production de bandages pneumatiques suivant une des revendications précédentes, **caractérisé en ce que** ledit émulsionnant répond à la formule CH₃(CH₂)₁₈CON(CH₃)CH₂COONa.

5. Ciment aqueux pour la production de bandages pneumatiques suivant la revendication 1, **caractérisé en ce que** le groupe aliphatique R₁ comprend une double liaison.

6. Ciment aqueux pour la production de bandages de pneumatiques suivant la revendication 5, caractérisé en ce ledit émulsionnant répond à la formule CH₃(CH₂)₇CHCH(CH₂)CONHCH₂COONa ou CH₂CH(CH₂)₈CONHCH₂COONa.

7. Ciment aqueux pour la production de bandages pneumatiques suivant une des revendications précédentes, **caractérisé en ce qu'**il comprend 0,5 à 5 % en poids dudit émulsionnant.

8. Bandage pneumatique produit en utilisant un ciment aqueux suivant l'une quelconque des revendications précédentes.
